# EUROPEAN PATENT SPECIFICATION

(11) **EP 2 447 859 B1**
(45) Date of publication and mention of the grant of the patent: **08.04.2015**
(21) Application number: 11171831.8
(22) Date of filing: 29.06.2011
(51) Int. Cl.: G06F 17/30

(54) **System and method for acceleration of malware detection using antivirus cache**
System und Verfahren zur Beschleunigung der Malware-Erkennung mit einem Antivirus-Zwischenspeicher
Système et procédé pour l'accélération de la détection de programmes malveillants au moyen du cache antivirus

(30) Priority: 01.11.2010 RU 2010144584
(43) Date of publication of application: 02.05.2012
(73) Proprietor: Kaspersky Lab, ZAO, Moscow 125212 (RU)
(72) Inventor: Batenin, Vyacheslav A., 123060 Moscow (RU)
(74) Representative: Sloboshanin, Sergej

(56) References cited:
- EP-A2- 1 316 873
- US-A1- 2008 282 351
- US-B1- 6 324 623
- US-B1- 7 523 500
- US-B1- 7 591 019

## Description

### Technical Field

The present invention relates to a system for acceleration of computer malware detection system using antivirus cache in accordance with the preamble of claim 1 and to a method applying caching of antivirus database files for acceleration of computer malware detection system.

### Prior Art

At the present time antivirus bases contain information necessary for the operation of antivirus systems, which information must regularly be supplemented with definitions of new viruses and other information to counter new kinds of threats, including executable code executing the selection of format of data objects as well as their unpacking and decoding.

Antivirus bases are quite large (tens of megabytes). A full update by downloading the entire new version of the base is impractical. Therefore an incremental method is used for updating, wherein the antivirus application downloads only updates of the database and combines them with the previously downloaded content.

The updates are supplied as files containing different information categories, such as:
- signatures of viruses and other threats;
- executable code of algorithms for unpacking and heuristically analyzing data;
- pseudocode (interpretable byte-code) of algorithms for unpacking and heuristically analyzing data;
- information for removing detected threats etc.

Each database file can contain data of different categories. This format is convenient for modifying the database, but is not always convenient for the operation of an object scanning module.

For the operation of a scanning module it is required that the information is grouped in categories (all signatures in one place, all code in another place etc.). The initial information must often be converted into a different format for more effective processing of the scanning module, for instance, sorting signatures to speed up search.

US 2008/0282351 A1 discloses techniques and apparatuses for scanning a computing device for malware and includes a trusted operating environment, which includes a trusted operating system and a trusted antivirus tool, which is embodied on a removable data storage medium, wherein a computing device is then booted from the removable data storage medium using the trusted operating system, wherein the trusted antivirus tool searches the computing devise for malware definition updates and uses the trusted operating system to scan the computing device for malware.

Known systems use antivirus databases consisting of a multitude of individually updated files of limited size. During update, new files are added or one or several files are replaced by new content. During the loading of the base into the RAM the scanning module successively reads the files into the memory and converts the structure of the data to an internal representation convenient for operation. The conversion takes places in the RAM. A similar system for updating bases is described in US 7461373, as well as in the applications EP 1655682 A2 and US 20070277167 A1.

The use of these systems is facilitated by the simplicity of maintaining the database, since individual files can easily be modified autonomously.

A drawback of the existing systems is that every time the scanning module is started, the antivirus base is loaded into the RAM of the computer, which includes a re-grouping of the data by category. In particular, such a conversion is performed by collecting data of one format in one section. As a result, several sections are formed, each of which contains data belonging to one category. This process consumes additional system resources and decreases the operation speed of the scanning module.

Another drawback of existing systems of loading an antivirus database is the inefficient use of the memory when the antivirus database is used in several processes. In this instance a copy of the database files is loaded into the RAM for each process. The more processes and the larger the size of the database files, the more system memory is required.

Thus, two essential drawbacks of the known systems for loading antivirus databases can be identified:
1. For conversion of one format of representation of the antivirus database into another, the RAM of the computer is used for every loading of the antivirus application, that is, there is an increase of the required resources of the computer memory during operation of the scanning module.
2. The difficulties in achieving a joint use of one antivirus database by several processes.

It is the object of the present invention to overcome the above-mentioned deficiencies and to provide an antivirus scanning system and a method of a generic kind, allowing accelerating launch of an antivirus application.

### Summary of the Invention

The object of the present invention is obtained with a system for accelerating launch of an antivirus application and a corresponding system according to claim 1 and a corresponding method according to claim 7, respectively. Claims 2 to 6 refer to further embodiments of the inventive system, while claims 8 to 12 refer to further embodiments of the corresponding method.

The technical result of the present invention lies in the acceleration of computer malware detection system by creating a cache from an antivirus base which is used by antivirus application without any further conversion.

In one example embodiment, the antivirus application maintains an antivirus cache in a nonvolatile memory of a computer system, e.g., hard drive. The antivirus application periodically checks if the antivirus cache requires updating and, if so, loads one or more updates from an antivirus database. Each update contains different types of data and executable code associated with different types of known malware. During update, the same types of data for each type of malware is collected and stored as data files in corresponding sections of the antivirus cache. The executable code from each loaded update is converted into a dynamic library, such as dynamically-linked library or dynamic shared objects (DSO) and stored in a corresponding section of the antivirus cache. During launch of the antivirus application, the system maps one or more data files of the antivirus cache into physical memory, so that these memory-mapped data files and the dynamic libraries of the antivirus cache may be accessed by the antivirus application without further conversion, thereby significantly accelerating the lunch time of the antivirus application every time its starts.

### Brief Description of the Drawings

Additional objects, features and advantages of the present invention will become evident from the lecture of the following description of the implementation of the invention, making reference to the accompanying drawings, in which:
- Fig. 1: schematically illustrates the system for acceleration of computer malware detection system,
- Fig. 2: shows the working algorithm of the system for acceleration of computer malware detection system,
- Fig. 3: schematically shows the structure of the formation of the antivirus base cache.
- Fig. 4: schematically shows the use of the antivirus base cache by several processes.

### Description of the Embodiments of the Present Invention

The objects and features of the present invention as well as the methods for achieving these objects and features will become clear by reference to the exemplary embodiments. However, the present invention is not limited to the exemplary embodiments disclosed below; it can be realized in different forms. The essence set forth in the description is nothing else than specific details to help the person skilled in the pertinent art to gain comprehensive understanding of the present invention.

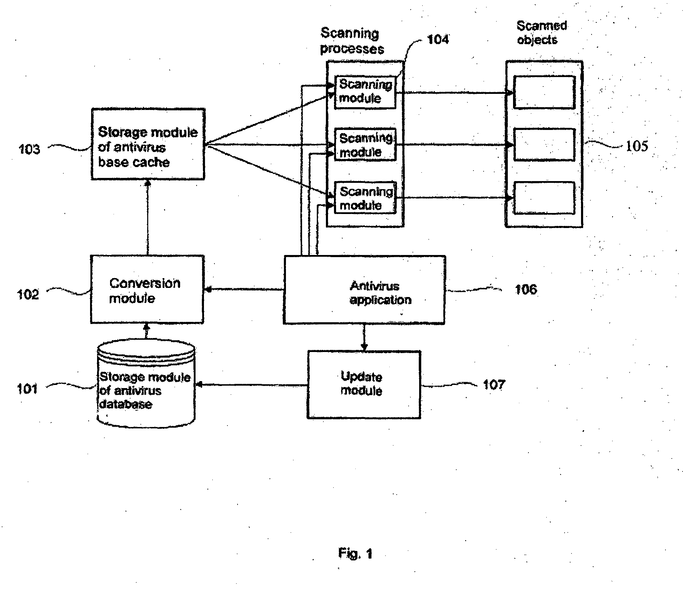

Fig. 1 schematically shows the system for acceleration of computer malware detection system.

The system for acceleration of computer malware detection system in one embodiment consists of the following modules:
- an antivirus application 106 controlling the processes of scanning the scanned objects and also starting the process of updating the antivirus database and the process of converting the antivirus base cache;
- an update module 107 started by the antivirus application and carrying out the scanning for the presence of a new antivirus database and loading it in the event of a positive scanning result;
- a storage module of antivirus database 101, in which the antivirus base is stored and loaded by the update module from an update server;
- a conversion module 102 started by the antivirus application and forming the antivirus base cache;
- a storage module 103 of the antivirus base cache, in which the antivirus base cache is stored, which is used by the scanning module;
- a scanning module 104, which carries out the scanning of the scanned objects 105.

The initial data from which the cache is formed are located in the storage module of antivirus database 101. The antivirus base consists of files to be updated, each of which contains different types of information, for instance the signatures of threats, executable code etc. In this representation the antivirus database is not used by the scanning module directly, it must be converted into an internal format.

To accelerate launch of an antivirus application, it is necessary to set up an antivirus base cache in such a format that it can be accessed by the antivirus application without further conversion, thereby significantly accelerating the launch time of the antivirus application every time its starts.

In the antivirus base update process the antivirus application starts the update module 107. The update module runs a scan for the presence of modifications in the current version of the antivirus database and loads missing or modified files in the event of a positive scan result.

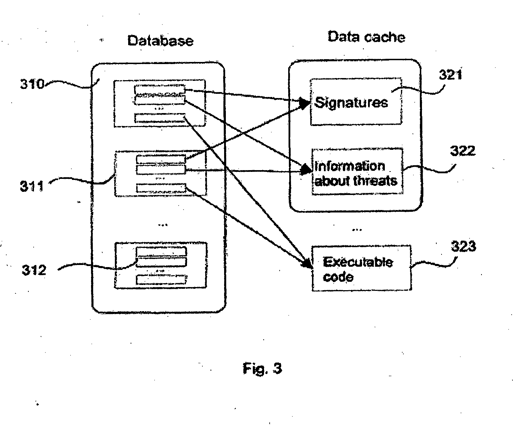

The conversion of the antivirus database in the antivirus base cache is carried out by the conversion module 102. The conversion module is started by the antivirus application after each base update in the module 101 and carries out the conversion of the antivirus database in the cache. The details of the process of the formation of the antivirus base cache are described below in the discussion of Fig. 3.

After the antivirus base cache has been formed, it is stored in the storage module 103 of the antivirus base cache and is used in one or several scanning processes.

The established antivirus base cache will be modified only in the following update of the antivirus database. During unloading and re-loading of the antivirus application, the antivirus base cache can be re-used without any need to convert it, which speeds up the re-loading of the antivirus system.

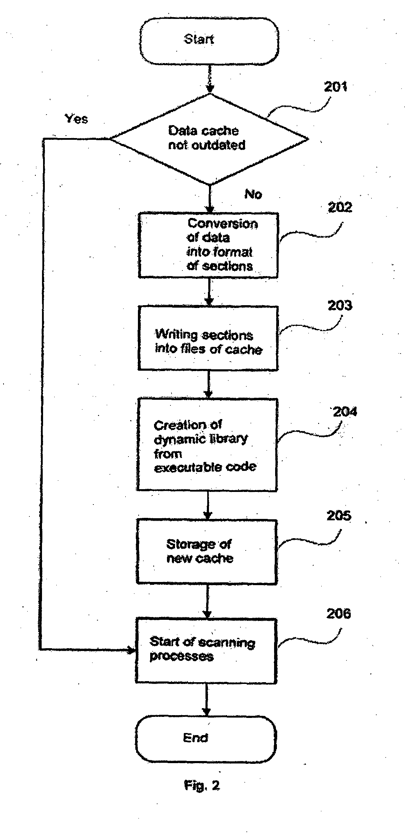

Fig. 2 illustrates the working algorithm of the system for acceleration of computer malware detection system.

Initially a match scan of the antivirus base storage cache with the current antivirus database is done in step 201. If the version of the antivirus base cache does not match the current version, the update module 107 loads the new version of the database, by the content of which the cache is updated with the help of the conversion module 102.

If the version of the cache corresponds to the current version of the antivirus base stored in the module 101, the conversion does not take place, and a start (re-start) of the scanning module takes place in step 206.

The updated antivirus database consists of files containing different data types. Since for the operation of the scanning module it is required that the information is grouped in sections (all signatures in one place, all code in another place etc.), after loading the database the process of its conversion and the creation of sections is carried out is step 202. By the breaking up into sections, a representation of the data is created in a form which is convenient for the operation of the scanning module. In each section, data of one type are stored which can be used immediately by the scanning module without additional conversions.

In the processing of the base by the conversion module, the antivirus base cache is formed: each section is written into the cache file mapped to the memory (a.k.a. memory-mapped file) in step 203, from the sections containing the executable code a dynamic library is formed in step 204. Further, all files forming the new antivirus base cache are stored in step 205 in such a way that they are used instead of the old version of the antivirus base cache. The antivirus application starts the scanning processes in step 206, and the scanning module loads the information from the new version of the antivirus base cache.

The characteristic particularity of the present system is the creation of the antivirus base cache and the storage of the cache in the storage module of the antivirus base cache 103. In Fig. 3 the structure of the formation of the antivirus base cache is shown schematically.

The antivirus base cache is formed from files of the current antivirus database 310 located in the storage module of antivirus database 101. The database is a collection of files 311, each of which can comprise data of different types 312. In the first phase of the cache formation the process of re-grouping the content of the files located in the database takes place. The re-grouping is done following the principle of forming sections in which data of one type are contained. Thus, all signatures of threats are in one section, information about threats in another, executable code in a third, and so on. As a result, several separate sections are obtained.

After completion of the process of re-grouping the data and the creation of sections, the storage of the sections as cache files is carried out. Sections comprising data other than executable code form files 321, 322 mapped to the memory. From the sections with executable code a separate dynamic library 323 is formed.

The file-mapping mechanism makes it possible to work with the content of files as if they were loaded into the memory by file-reading. Files mapped to the memory have a structure making it possible for the scanning module to use their content by several applications simultaneously without additional conversion. This makes their shared use convenient immediately in several processes simultaneously. The convenience lies in that in the mapping of the files to the memory, the memory is not copied for the different processes. Consequently, in the operation of several processes with such files the memory of the system is used more efficiently.

However, the mechanism of mapping files to the memory does not allow efficient work with the sections comprising executable code. After loading the executable code, the relocation process is carried out: the executable code must be modified taking account of its real loading address. A modification of parts of the code containing absolute addresses takes place. As a result of the mapping of the section of executable code to different processes the mapping address can be different for each process, and the relocation of the code for each process must generally be done separately. Thus a shared use of a code section becomes impossible, since it must be modified individually for each process that uses it.

Another drawback of loading executable code into the memory is the presence of constraints imposed by the operating system on the execution of that code. For example, the operation system Windows allows the usage of instructions of Structured Exception Handling (SEH) only in code loaded in the form of a dynamic library that contains a special data structure, i.e. a list of safe SEH procedures.

To eliminate the described drawbacks, the executable code sections are converted into the format of a dynamic library 323 defined by the target operating system.

Dynamic-link libraries are modules which are loaded in the course of the operation of the scanning module. If the dynamic library is loaded into the address space, a single copy is accessible for use by a multitude of processes working with it, which has a positive effect on their operation speed. The loading of dynamic libraries of an operating system is carried out taking into account that their shared use must be rendered possible. For example, in the operating system Windows the library is loaded according to the address selected by the system in such a way that it is mapped to different processes without carrying out an individual relocation. In operating systems of the UNIX family, the PIC (position-independent code) format is used to accomplish this task. Thus the task of shared use of the executable code section by different processes is solved.

The dynamic library formed by this system is one of the elements of the database cache used by the scanning module 104.

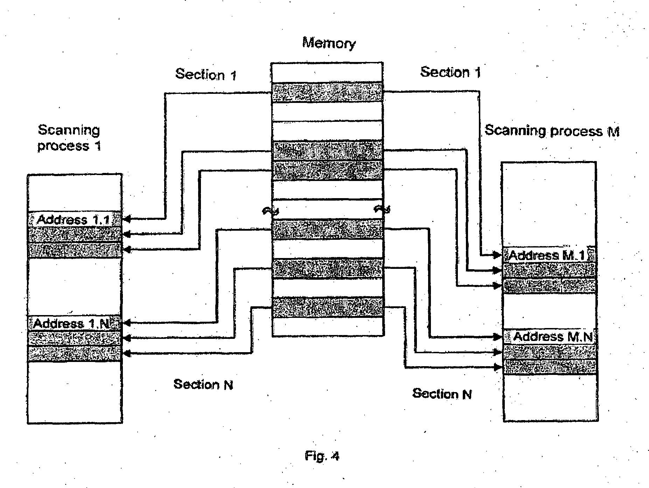

Fig. 4 schematically shows the use of the antivirus base cache by several processes. During an antivirus scan the antivirus application can create several scanning processes and monitor their execution. Each scanning process loads the scanning module 104 which uses the antivirus base cache represented in the form of files mapped to the memory, and a dynamic library, stored in the permanent memory.

The antivirus base cache represented in such a format makes it possible to load the cache files into the RAM and to use them simultaneously by several scanning processes. No additional conversions are carried out, since the required conversions were carried out in the stage of forming the cache from the antivirus database by the conversion module 102.

Parts of the memory are filled with cache data (section 1 - Section N) used by several processes (Process 1 - Process M). The cache files (mapped to the file memory and the dynamic library) make it possible to work with their content as well as with the memory area, which makes it possible to successfully use one and the same file by all processes simultaneously, while only one copy of the data is kept in the memory of the system.

In one of the versions of the described system all sections containing data (signatures, information about threats etc.) can also be placed in a common dynamic library in the form of read-only data sections. In this case the dynamic library must be re-generated when the data contained therein are updated.

The scanning module 104 itself can also be updated. The new version of the scanning module can use another internal representation of the database. During this, the conversion module forming the database cache must also be updated. During loading of the updated database the new version of the conversion module forms the sections of the cache files in the new format.

Thus the system solves the task of accelerating launch of an antivirus application due to the use of the antivirus base cache by the scanning module. The antivirus base cache is formed by the loading module from the antivirus database in a format usable by the scanning module.

## Claims

1. A system for accelerating launch of an antivirus application (106), comprising:
a non-volatile memory for storing an antivirus base cache (103) comprising a plurality of sections for containing different types of data, wherein in each section data of one type are stored, and executable code associated with different types of malware;
a processor coupled to the non-volatile memory, the processor comprising a plurality of modules (102, 104, 106, 107) being configured to:
determine if the antivirus base cache (103) requires updating;
load one or more updates for the antivirus base cache (103), wherein each update contains at least different types of data and executable code associated with a computer malware;
store the same types of data from each loaded update as a data file in a corresponding section of the antivirus base cache (103);
convert executable code sections from each loaded update into a dynamic library (323) defined by the target operating system and store the dynamic library (323) in a corresponding section of the antivirus base cache (103);
map at least sections comprising data other than executable code in the antivirus base cache (103) of the non-volatile memory into a random-access memory of the system; and
execute one or more malware detection processes, wherein the memory-mapped data files and the dynamic libraries of the antivirus base cache (103) are shared among the one or more malware detection processes.

2. The system according to claim 1, further comprising a conversion module (102) being connected to and provided for forming the antivirus base cache (103), applying thereby the mechanism of mapping the files (321, 322) to the non-volatile memory.

3. The system according to claim 2, wherein the conversion module (102) is adapted to carry out a process of re-grouping the content of the files located in a storage module of the antivirus database (101) and to create and store sections in the form of files of the antivirus base cache (103), wherein the sections containing data, with the exception of executable code, form the memory-mapped files (321, 322), while from the section with executable code a separate dynamic library (323) is formed.

4. The system according to any of claims 1-3, wherein the antivirus application (106) is provided for starting a new scanning process to carry out an antivirus scan of a new scanned object (105).

5. The system according to any of claims 1-3, wherein the conversion module (102) is provided for modifying the antivirus base cache in the storage module of the antivirus base cache (103) during update of the antivirus base in the storage module of the antivirus database (101).

6. A method for accelerating launch of an antivirus application (106), comprising:
determining if an antivirus base cache (103) in a non-volatile memory of a computer system requires updating, wherein the antivirus base cache (103) includes a plurality of sections containing different types of data wherein in each section data of one type are stored, and executable code associated with different types of computer malware;
loading one or more updates for the antivirus base cache (103), wherein each update contains at least different types of data and executable code associated with a computer malware;
storing the same types of data from each loaded update as a data file (321, 322) in a corresponding section of the antivirus base cache (103);
converting executable code sections from each loaded update into a dynamic library (323) defined by the target operating system and storing the dynamic library (323) in a corresponding section of the antivirus base cache (103);
mapping at least sections comprising data other than executable code in the antivirus base cache (103) of the non-volatile memory into a random-access memory of the computer system; and
executing one or more malware detection processes on the computer system, wherein the memory-mapped data files (321, 322) and the dynamic libraries (323) of the antivirus base cache (103) are shared among the one or more malware detection processes.

7. The method according to claim 6, wherein each section containing data, with the exception of executable code, is written into the memory-mapped file of the antivirus base cache (103), while from the section containing the executable code a dynamic library (323) is formed.

8. The method according to one of the claims 6 or 7, further comprising performing a match scan of the antivirus base cache (103) stored in a storage module with the current antivirus database.

9. The method according to one of claims 6 to 8, wherein the antivirus application (106) creates several scanning processes and monitors their execution.

10. The method according to claim 9, wherein each scanning process loads a scanning module (104) which uses the antivirus base cache represented in the form of memory-mapped files (321, 322), and in the form of a dynamic library (323), stored in the permanent memory.

11. The method according to claim 10, wherein the antivirus base cache (103) is formed by a conversion module (102) from an antivirus database (101) in a format usable by the scanning module (104).

## Patentansprüche

1. System zur Beschleunigung des Startens einer Antivirus-Anwendung (106), umfassend:
- einen nicht-flüchtigen Speicher zum Speichern eines Antivirus-Basis-Caches (103), der eine Vielzahl von Abschnitten zur Aufnahme von unterschiedlichen Typen von Daten, wobei in jedem Abschnitt Daten eines Typs gespeichert sind, und von ausführbarem Code umfasst, der unterschiedlichen Typen von Schadsoftware zugeordnet ist,
- einen mit dem nicht-flüchtigen Speicher verbundenen Prozessor, wobei der Prozessor eine Vielzahl von Modulen (102, 104, 106, 107) umfasst, die dafür konfiguriert sind,
- zu bestimmen, ob der Antivirus-Basis-Cache (103) einer Aktualisierung bedarf,
- eines oder mehrere Updates für den Antivirus-Basis-Cache (103) zu laden, wobei jedes Update wenigstens unterschiedliche Typen von Daten und von einer Computer-Schadsoftware zugeordnetem ausführbarem Code enthält,
- die gleichen Typen von Daten aus jedem geladenen Update als eine Datendatei in einem entsprechenden Abschnitt des Antivirus-Basis-Caches (103) zu speichern,
- Abschnitte mit ausführbarem Code aus jedem geladenen Update in eine dynamische Bibliothek (323) umzuwandeln, die durch das Zielbetriebssystem definiert ist, und die dynamische Bibliothek (323) in einem entsprechenden Abschnitt des Antivirus-Basis-Caches (103) zu speichern,
- wenigstens Abschnitte in dem Antivirus-Basis-Cache (103) des nicht-flüchtigen Speichers, die andere Daten als ausführbaren Code umfassen, in einen Direktzugriffsspeicher des Systems abzubilden, und
- einen oder mehrere Schadsoftware-Erfassungsprozesse durchzuführen, wobei die speicherabgebildeten Datendateien und die dynamischen Bibliotheken des Antivirus-Basis-Caches (103) zwischen dem einen oder den mehreren Schadsoftware-Erfassungsprozessen aufgeteilt werden.

2. System nach Anspruch 1, das weiterhin ein Umwandlungsmodul (102) umfasst, das mit dem Antivirus-Basis-Cache (103) verbunden ist und zu seiner Bildung vorgesehen ist, wobei der Mechanismus des Abbildens der Dateien (321, 322) in den nicht-flüchtigen Speicher angewandt wird.

3. System nach Anspruch 2, wobei das Umwandlungsmodul (102) dazu ausgelegt ist, einen Prozess der Umgruppierung des Inhalts der Dateien durchzuführen, die sich in einem Speichermodul der Antivirus-Datenbank (101) befinden, und Abschnitte in Form von Dateien des Antivirus-Basis-Caches (103) zu erzeugen und zu speichern, wobei die Abschnitte, die Daten außer ausführbaren Code enthalten, die speicherabgebildeten Dateien (321, 322) bilden, während aus dem Abschnitt mit ausführbarem Code eine separate dynamische Bibliothek (323) gebildet wird.

4. System nach irgendeinem der Ansprüche 1-3, wobei die Antivirus-Anwendung (106) zum Starten eines neuen Scan-Prozesses vorgesehen ist, um einen Antivirus-Scan eines neuen gescannten Objekts (105) auszuführen.

5. System nach irgendeinem der Ansprüche 1-3, wobei das Umwandlungsmodul (102) zum Modifizieren des Antivirus-Basis-Caches in dem Speichermodul des Antivirus-Basis-Caches (103) während der Aktualisierung der Antivirus-Basis in dem Speichermodul der Antivirus-Datenbank (101) vorgesehen ist.

6. Verfahren zur Beschleunigung des Startens einer Antivirus-Anwendung (106), umfassend:
- Bestimmen, ob ein Antivirus-Basis-Cache (103) in einem nicht-flüchtigen Speicher eines Computersystems einer Aktualisierung bedarf, wobei der Antivirus-Basis-Cache (103) eine Vielzahl von Abschnitten umfasst, die unterschiedliche Typen von Daten, wobei in jedem Abschnitt Daten eines Typs gespeichert werden, und von ausführbarem Code enthalten, der unterschiedlichen Typen von Schadsoftware zugeordnet ist,
- Laden eines oder mehrerer Updates für den Antivirus-Basis-Cache (103), wobei jedes Update wenigstens unterschiedliche Typen von Daten und von einer Computer-Schadsoftware zugeordnetem ausführbarem Code enthält,
- Speichern der gleichen Typen von Daten aus jedem geladenen Update als eine Datendatei (321, 322) in einem entsprechenden Abschnitt des Antivirus-Basis-Caches (103),
- Umwandeln von Abschnitten mit ausführbarem Code aus jedem geladenen Update in eine dynamische Bibliothek (323), die durch das Zielbetriebssystem definiert ist, und Speichern der dynamischen Bibliothek (323) in einem entsprechenden Abschnitt des Antivirus-Basis-Caches (103),
- Abbilden wenigstens von Abschnitten in dem Antivirus-Basis-Cache (103) des nicht-flüchtigen Speichers, die andere Daten als ausführbaren Code umfassen, in einen Direktzugriffsspeicher des Computersystems, und
- Ausführen eines oder mehrerer Schadsoftware-Erfassungsprozesse auf dem Computersystem, wobei die speicherabgebildeten Datendateien (321, 322) und die dynamischen Bibliotheken (323) des Antivirus-Basis-Caches (103) zwischen dem einen oder den mehreren Schadsoftware-Erfassungsprozessen aufgeteilt werden.

7. Verfahren nach Anspruch 6, wobei jeder Abschnitt, der Daten außer ausführbaren Code enthält, in die speicherabgebildete Datei des Antivirus-Basis-Caches (103) geschrieben wird, während aus dem Abschnitt, der den ausführbaren Code enthält, eine dynamische Bibliothek (323) gebildet wird.

8. Verfahren nach einem der Ansprüche 6 oder 7, das weiterhin umfasst, dass ein Übereinstimmungsscan des in einem Speichermodul gespeicherten Antivirus-Basis-Caches (103) mit der aktuellen Antivirus-Datenbank durchgeführt wird.

9. Verfahren nach einem der Ansprüche 6 bis 8, wobei die Antivirus-Anwendung (106) mehrere Scanprozesse erzeugt und ihre Ausführung überwacht.

10. Verfahren nach Anspruch 9, wobei jeder Scanprozess ein Scanmodul (104) lädt, das den Antivirus-Basis-Cache verwendet, der in Form von speicherabgebildeten Dateien (321, 322) und in Form einer in dem Permanentspeicher gespeicherten dynamischen Bibliothek (323) repräsentiert ist.

11. Verfahren nach Anspruch 10, wobei der Antivirus-Basis-Cache (103) von einem Umwandlungsmodul (102) aus einer Antivirus-Datenbank (101) in einem Format gebildet wird, das durch das Scanmodul (104) verwendbar ist.

## Revendications

1. Un système d'accélération du lancement d'une application antivirus (106), comprenant :
une mémoire non volatile destinée à la conservation en mémoire d'une mémoire tampon de base d'antivirus (103) comprenant une pluralité de sections destinées à contenir différents types de données, dans lequel, dans chaque section, des données d'un type sont conservés en mémoire, et du code exécutable associé à différents types de logiciels malveillants,
un processeur couplé à la mémoire non volatile, le processeur comprenant une pluralité de modules (102, 104, 106, 107) qui sont configurés de façon à :
déterminer si la mémoire tampon de base d'antivirus (103) exige une mise à jour,
charger une ou plusieurs mises à jour destinées à la mémoire tampon de base d'antivirus (103), chaque mise à jour contenant au moins différents types de données et du code exécutable associé à un logiciel malveillant,
conserver en mémoire les mêmes types de données provenant de chaque mise à jour chargée sous la forme d'un fichier de données dans une section correspondante de la mémoire tampon de base d'antivirus (103),
convertir des sections de code exécutable provenant de chaque mise à jour chargée en une bibliothèque dynamique (323) définie par le système d'exploitation cible et conserver en mémoire la bibliothèque dynamique (323) dans une section correspondante de la mémoire tampon de base d'antivirus (103),
mapper au moins des sections contenant des données autres que du code exécutable dans la mémoire tampon de base d'antivirus (103) de la mémoire non volatile vers une mémoire à accès aléatoire du système, et
exécuter un ou plusieurs processus de détection de logiciels malveillants, les fichiers de données mappés avec la mémoire et les bibliothèques dynamiques de la mémoire tampon de base d'antivirus (103) étant partagés entre les un ou plusieurs processus de détection de logiciels malveillants.

2. Le système selon la revendication 1, comprenant en outre un module de conversion (102) qui est raccordé à et destiné à la formation de la mémoire tampon de base d'antivirus (103), appliquant ainsi le mécanisme de mappage des fichiers (321, 322) à la mémoire non volatile.

3. Le système selon la revendication 2, dans lequel le module de conversion (102) est adapté de façon à exécuter un processus de regroupement du contenu des fichiers placés dans un module d'espace mémoire de la base de données d'antivirus (101) et de façon à créer et conserver en mémoire des sections sous la forme de fichiers de la mémoire tampon de base d'antivirus (103), les sections contenant des données, à l'exception de code exécutable, formant les fichiers mappés avec la mémoire (321, 322), tandis que, à partir de la section avec du code exécutable une bibliothèque dynamique distincte (323) est formée.

4. Le système selon l'une quelconque des revendications 1 à 3, dans lequel l'application antivirus (106) est adaptée de façon à lancer un nouveau processus de balayage destiné à exécuter un balayage antivirus d'un nouvel objet balayé (105).

5. Le système selon l'une quelconque des revendications 1 à 3, dans lequel le module de conversion (102) est adapté de façon à modifier la mémoire tampon de base d'antivirus dans le module d'espace mémoire de la mémoire tampon de base d'antivirus (103) au cours d'une mise à jour de la base d'antivirus dans le module d'espace mémoire de la base de données d'antivirus (101).

6. Un procédé d'accélération du lancement d'une application antivirus (106), comprenant :
la détermination si une mémoire tampon de base d'antivirus (103) dans une mémoire non volatile d'un système informatique exige une mise à jour, la mémoire tampon de base d'antivirus (103) comprenant une pluralité de sections contenant différents types de données, dans lequel, dans chaque section, des données d'un type sont conservés en mémoire, et du code exécutable associé à différents types de logiciels malveillants,
le chargement d'une ou de plusieurs mises à jour pour la mémoire tampon de base d'antivirus (103), chaque mise à jour contenant au moins différents types de données et du code exécutable associé à un logiciel malveillant,
la conservation en mémoire des mêmes types de données provenant de chaque mise à jour chargée sous la forme d'un fichier de données (321, 322) dans une section correspondante de la mémoire tampon de base d'antivirus (103),
la conversion de sections de code exécutable provenant de chaque mise à jour chargée en une bibliothèque dynamique (323) définie par le système d'exploitation cible et la conservation en mémoire de la bibliothèque dynamique (323) dans une section correspondante de la mémoire tampon de base d'antivirus (103),
le mappage d'au moins des sections contenant des données autres que du code exécutable dans la mémoire tampon de base d'antivirus (103) de la mémoire non volatile vers une mémoire à accès aléatoire du système informatique, et
l'exécution d'un ou de plusieurs processus de détection de logiciels malveillants sur le système informatique, les fichiers de données mappés avec la mémoire (321, 322) et les bibliothèques dynamiques (323) de la mémoire tampon de base d'antivirus (103) étant partagés entre les un ou plusieurs processus de détection de logiciels malveillants.

7. Le procédé selon la revendication 6, dans lequel chaque section contenant des données, à l'exception de code exécutable, est écrite dans le fichier mappé de la mémoire de la mémoire tampon de base d'antivirus (103), tandis que, à partir de la partie contenant le code exécutable, une bibliothèque dynamique (323) est formée.

8. Le procédé selon l'une quelconque des revendications 6 ou 7, comprenant en outre l'exécution d'un balayage d'appariement de la mémoire tampon de base d'antivirus (103) conservée en mémoire dans un module d'espace mémoire avec la base de données d'antivirus courante.

9. Le procédé selon l'une quelconque des revendications 6 à 8, dans lequel l'application antivirus (106) crée plusieurs processus de balayage et surveille leur exécution.

10. Le procédé selon la revendication 9, dans lequel chaque processus de balayage charge un module de balayage (104) qui utilise la mémoire tampon de base d'antivirus représentée sous la forme des fichiers mappés avec la mémoire (321, 322) et sous la forme d'une bibliothèque dynamique (323) conservée en mémoire dans la mémoire permanente.

11. Le procédé selon la revendication 10, dans lequel la mémoire tampon de base d'antivirus (103) est formée par un module de conversion (102) à partir d'une base de données d'antivirus (101) dans un format utilisable par le module de balayage (104).
